# DEMANDE DE BREVET EUROPEEN

(11) **EP 4 523 998 A1**
(43) Date de publication de la demande: **19.03.2025**
(21) Numéro de dépôt: 24191889.5
(22) Date de dépôt: 30.07.2024
(51) Int. Cl.: B62D 21/11, B62D 25/08

(54) **VÉHICULE AUTOMOBILE COMPRENANT UN COMPRESSEUR DE CLIMATISATION ET UN SUPPORT DUDIT COMPRESSEUR**

(30) Priorité: 15.09.2023 FR 2309737
(71) Demandeur: Renault s.a.s, 92100 Boulogne Billancourt (FR)
(72) Inventeur: BUFFETAUD, Julien, 78280 Guyancourt (FR); EVEN, Franck, 78280 Guyancourt (FR)

(57) **Abrégé**

Véhicule (1) automobile comprenant un berceau (2) de véhicule fixé à un châssis et s'étendant transversalement selon un axe transversal (Y), une face avant technique (5) et un compresseur (10) d'un système de climatisation.

Le véhicule comprend un support (6) s'étendant selon un axe longitudinal (X) perpendiculaire à l'axe transversal (Y) et comprenant deux extrémité longitudinales opposées fixées chacune respectivement à la face avant technique (5) et au berceau (2).

Le compresseur (10) est fixé sur ledit support (6).

## Description

La présente invention concerne le domaine des véhicules automobiles et notamment la fixation d'un compresseur dans un véhicule comprenant au moins une machine électrique.

Le compresseur est, de préférence, un compresseur de climatisation d'un système de climatisation.

Le véhicule automobile peut être à propulsion thermique, la machine électrique étant un alterno-démarreur. En variante, le véhicule automobile peut être un véhicule thermique et électrique en étant un véhicule hybride, la machine électrique assurant au moins partiellement la propulsion du véhicule. Le véhicule automobile peut aussi être un véhicule à propulsion électrique.

Aujourd'hui, les compresseurs du système de climatisation du véhicule automobile sont fixés sur la machine électrique, ce qui permet de profiter de la filtration de cette dernière. La machine électrique est ensuite reliée à une traverse de support par deux pièces de suspension se trouvant chacune à une extrémité opposée de la machine électrique.

Le positionnement d'une de ces pièces de suspensions est confronté à un manque de place qui limite la fixation du compresseur autrement que sur la machine électrique.

Par ailleurs, l'encombrement des compresseurs électriques nommés « e-compresseurs » ne permet plus leur intégration sur les moteurs. En effet, de tels compresseurs nécessitent un besoin de filtration plus performant, de sorte qu'ils ne peuvent plus être fixés sur la machine électrique du groupe motopropulseur.

Afin de remédier à ce changement de dimensions, de tels e-compresseurs sont installés sur des traverses ajoutées à cet effet.

Toutefois, l'ajout d'une traverse peut être particulièrement contraignant en termes d'encombrement et de sécurité.

Il existe donc un besoin d'améliorer la fixation des nouveaux compresseurs de climatisation dans un véhicule automobile comprenant au moins une machine électrique.

Un objectif de l'invention est de proposer une fixation d'un compresseur de climatisation, tout en garantissant un espace suffisant pour un système de filtration du compresseur.

L'invention vise particulièrement à supprimer les traverses supplémentaires sur lesquelles sont fixés les e-compresseurs.

La présente invention a pour objet un véhicule automobile comprenant un berceau de véhicule fixé à un châssis et s'étendant transversalement selon un axe transversal, une face avant technique et un compresseur d'un système de climatisation.

Le véhicule comprend un support s'étendant selon un axe longitudinal perpendiculaire à l'axe transversal et comprenant deux extrémité longitudinales opposées fixées chacune respectivement à la face avant technique et au berceau.

Le compresseur est fixé sur ledit support.

Ainsi, on permet une fixation fiable d'un compresseur de climatisation, tout en garantissant un espace suffisant pour un système de filtration du compresseur.

Par ailleurs, de par sa forme, le support permet d'absorber les efforts d'un choc frontal sur la face avant technique.

Avantageusement, le support comprend au moins un bossage s'étendant selon un axe vertical et comprenant un perçage coopérant avec des éléments de visseries pour la fixation du compresseur.

Par exemple, le compresseur comprend au moins une patte de fixation permettant la fixation sur un bossage du support.

De préférence, le support comprend au moins deux bossages s'étendant chacun selon l'axe vertical et comprenant chacun un perçage coopérant avec des éléments de visseries pour la fixation du compresseur.

Les bossages sont par exemple réalisés par emboutissage d'une tôle métallique.

Les bossages sont, par exemple, parallèles entre eux dans la direction longitudinale.

Avantageusement, le support comprend un corps de forme générale plate s'étendant selon l'axe longitudinal présentant une largeur (selon l'axe transversal) inférieure à sa longueur (selon l'axe longitudinal).

Avantageusement, le compresseur comprend un système de filtration intégré.

Le véhicule peut ainsi comprendre deux espaces longitudinaux délimités respectivement entre la face avant technique et le compresseur et entre le compresseur et le berceau.

Lesdits espaces longitudinaux permettent d'assurer le volume de filtration nécessaire au compresseur.

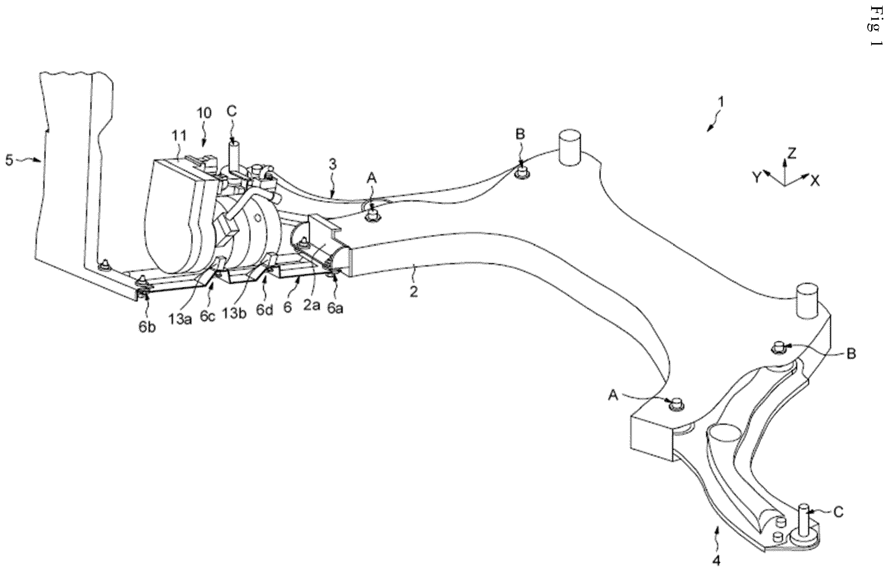

D'autres buts, caractéristiques et avantages de l'invention apparaîtront à la lecture de la description suivante, donnée uniquement à titre d'exemple non limitatif, et faite en référence aux dessins annexés sur lesquels :
[Fig. 1]
   illustre de manière très schématique une partie du train avant d'un véhicule automobile selon l'invention ; et
[Fig.2]
   représente une vue de côté de la figure 1.

Dans la description qui suit, les termes « longitudinal », « transversal », « vertical », « avant », « arrière », « gauche » et « droite » sont définis selon le repère orthogonal habituel des véhicules à moteur, représenté sur les dessins, et qui comprend :
- un axe longitudinal X, horizontal et orienté de l'avant vers l'arrière du véhicule ;
- un axe transversal Y, horizontal, perpendiculaire à l'axe longitudinal X et orienté de la gauche vers la droite du véhicule quand le véhicule avance ;
- un axe vertical Z, orthogonal aux axes longitudinal et transversal X et Y et dirigé de bas en haut.

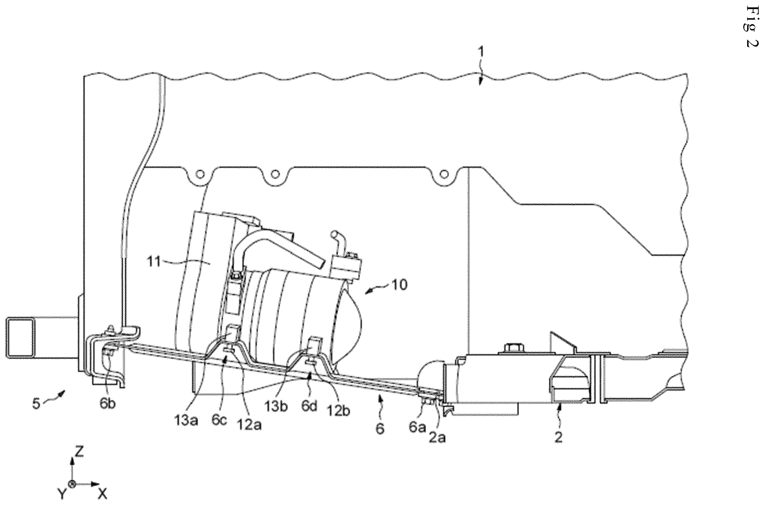

Les figures 1 et 2 illustrent un exemple d'une partie avant 1 d'un véhicule automobile comprenant un berceau 2 s'étendant transversalement selon un axe transversal Y, deux bras inférieurs 3, 4 fixés chacun à une extrémité du berceau 2 et une face avant technique 5 délimitant l'environnement extérieur du compartiment moteur (non représenté) du véhicule.

Le berceau d'un véhicule automobile est une pièce métallique fixée au châssis du véhicule et située sous le moteur du véhicule. Le berceau relie entre elles différentes pièces du moteur, notamment le moteur, les amortisseurs ou encore le réservoir de carburant afin de réduire les mouvements de ces pièces pendant le déplacement du véhicule.

De manière générale, le train avant d'un véhicule automobile comprend notamment, de chaque côté, un bras inférieur, barre ou triangle inférieur d'un système de suspension qui relie le berceau au moyeu de roue permettant notamment la fixation d'une fusée de roue, d'un étrier de frein et la liaison avec un cardan.

Les deux bras inférieurs 3, 4 sont, ici, symétriques. Chaque bras 3, 4 est fixé au berceau 2 par deux points de fixation A, B et à un moyeu de roue (non représenté) par un troisième point de fixation C.

L'invention n'est pas limitée à la forme du berceau illustré sur les figures.

La face avant technique 5 est reliée au berceau 2 par un support 6 s'étendant selon l'axe longitudinal X.

Chaque extrémité libre longitudinale du support 6 est fixée par des éléments de visseries 6a, 6b, respectivement sur une extrémité 2a du berceau 2 et sur la face avant technique 5.

Le support 6 comprend un corps de forme générale plate s'étendant selon l'axe longitudinal X présentant une largeur (selon l'axe transversal Y) inférieure à sa longueur (selon l'axe longitudinal X).

Tel qu'illustré, le support 6 comprend deux bossages 6c, 6d s'étendant chacun selon l'axe vertical Z vers le haut.

Les deux bossages 6c, 6d sont parallèles dans la direction longitudinale X.

Le véhicule automobile comprend en outre un compresseur 10 d'un système de climatisation (non représenté) du véhicule automobile. Le compresseur 10 comprend un système de filtration intégré 11 fixé sur le support 6 par des moyens de visseries 12a, 12b respectivement sur un bossage 6c, 6d dudit support 6.

Le carter du compresseur 10 comprend à cet effet deux pattes de fixation 13a, 13b permettant la fixation respectivement sur un bossage 6c, 6d.

Deux espaces longitudinaux sont délimités respectivement entre la face avant technique 5 et le compresseur 10 et entre le compresseur 10 et le berceau 2 et permettent d'assurer le volume de filtration nécessaire au compresseur 10.

Par ailleurs, de par sa forme, le support 6 permet d'absorber les efforts d'un choc frontal sur la face avant technique.

## Revendications

1. Véhicule (1) automobile comprenant un berceau (2) de véhicule fixé à un châssis et s'étendant transversalement selon un axe transversal (Y), une face avant technique (5) et un compresseur (10) d'un système de climatisation, **caractérisé en ce qu'**il comprend un support (6) s'étendant selon un axe longitudinal (X) perpendiculaire à l'axe transversal (Y) et comprenant deux extrémité longitudinales opposées fixées chacune respectivement à la face avant technique (5) et au berceau (2), et **en ce que** le compresseur (10) est fixé sur ledit support (6).

2. Véhicule (1) selon la revendication 1, dans lequel le support (6) comprend au moins un bossage (6c, 6d) s'étendant selon un axe vertical (Z) et comprenant un perçage coopérant avec des éléments de visseries (12a, 12b) pour la fixation du compresseur (10).

3. Véhicule (1) selon la revendication 2, dans lequel le compresseur (10) comprend au moins une patte de fixation (13a, 13b) permettant la fixation sur un bossage (6c, 6d) du support (6).

4. Véhicule (1) selon la revendication 2 ou 3, dans lequel le support (6) comprend au moins deux bossages (6c, 6d) s'étendant chacun selon l'axe vertical (Z) et comprenant chacun un perçage coopérant avec des éléments de visseries (12a, 12b) pour la fixation du compresseur (10).

5. Véhicule (1) selon la revendication 4, dans lequel les bossages (6c, 6d) sont parallèles dans la direction longitudinale (X).

6. Véhicule (1) selon l'une quelconque des revendications précédentes, dans lequel le support (6) comprend un corps de forme générale plate s'étendant selon l'axe longitudinal (X) présentant une largeur inférieure à sa longueur.

7. Véhicule (1) selon l'une quelconque des revendications précédentes, dans lequel le compresseur (10) comprend un système de filtration intégré (11).

8. Véhicule (1) selon l'une quelconque des revendications précédentes, comprenant deux espaces longitudinaux délimités respectivement entre la face avant technique (5) et le compresseur (10) et entre le compresseur (10) et le berceau (2).
